# EUROPEAN PATENT APPLICATION

(11) **EP 2 416 299 A2**
(43) Date of publication of application: **08.02.2012**
(21) Application number: 11006385.6
(22) Date of filing: 03.08.2011
(51) Int. Cl.: G08B 17/10

(54) **A smoke alarm with protection mechanism**

(30) Priority: 05.08.2010 PL 39206710
(71) Applicant: Diehl AKO Stiftung & Co. KG, 88239 Wangen (DE)
(72) Inventor: Hahs, Charles A. Jr., 50-344 Wroclaw (PL)
(74) Representative: Diehl Patentabteilung

(57) **Abstract**

The invention provides a smoke alarm (1) comprising a housing (2) delimiting a battery compartment (10); a fastening cover (3) adapted to be mounted to a support and to be connected with the housing (2); and protection mechanism for preventing installation of the smoke alarm (1) without a battery (11). Said protection mechanism comprises at least one spring member (17) having at least one side arm (17a,17b) and a lower arm (17c), which is connected with the at least one side arm (17a,17b) and located along and seated in the bottom (15) of the battery compartment (10). The lower arm (17c) is movable between the first position, when at least one battery (11) is missing in the battery compartment (10), in which the connection region of the lower arm (17c) and the at least one side arm (17a,17b) is located at distance from the bottom (15) and in which the at least one side arm (17a,17b) protrudes above the top surface of the housing (2) and prevents attachment of the housing (2) to the fastening cover (3) and the second position, when all batteries (11) are located in the battery compartment (10), in which the connection region of the lower arm (17c) and the at least one side arm (17a,17b) is located adjacent to the bottom (15) of the battery compartment (10) and in which the at least one side arm (17a,17b) is retracted below the top surface (6) of the housing (2) to allow attachment of the housing (2) to the fastening cover (3).

## Description

### Field of the invention:

The invention relates to a smoke alarm provided with a protection mechanism.

### Background of the invention:

It is desired to prevent a smoke alarm from being installed if there are no batteries in it. If batteries inside a smoke alarm are missing the smoke alarm does not detect and alarm danger. So, mechanisms are used in smoke alarms to prevent assembling and installation of smoke alarms when batteries are missing in them.

It is known a smoke alarm comprising a housing with a battery compartment and a protection mechanism in the form of a flat spring extending to the battery compartment from its sidewall and bending at the top surface of the detector housing adjacent to the battery compartment. The part of the spring, which is located on the top surface of the detector housing prevents the smoke alarm from being installed when the battery is not placed in the battery compartment. Upon placing the battery into the battery compartment the spring is pushed to the sidewall and the top bent part of the spring is shifted eliminating the obstacle for mounting of the housing to the fastening cover. The protection mechanism is designed to be used with a rectangular battery. As the mechanism comprises only one spring located at the sidewall of the battery compartment and activated by pushing it to the sidewall, it cannot provide the same protection in the smoke alarm when more than one battery is needed.

It is also known a smoke alarm with a protection mechanism, which comprises a plastic plate provided in a battery compartment of the detector housing, in which battery is to be located. The plate is pushed up by a coil spring located below it and the plate has a pin attached to it from a top. When a battery in the battery compartment is missing, the pin extends beyond the upper edge of the detector housing preventing the housing to be fastened to a fastening cover. Before placing a battery into the battery compartment, the plastic plate has to be pushed down against the spiral spring causing that the pin member moves to its lower position and allows the housing to be attached to the fastening cover. The known protection mechanism is very complex and susceptible to damages.

### Summary of the invention

The objective of the invention is to provide an improved smoke alarm which overcomes the above mentioned drawbacks of prior art.

The objective of the invention is to provide an improved smoke alarm, which comprises a simple and reliable protection mechanism.

The objective of the invention is to provide an improved smoke alarm, which prevents installation of the smoke alarm when at least one battery is missing from the required set of batteries.

According to the invention a smoke alarm comprising a housing having a top surface and delimiting a battery compartment having sidewalls and a bottom, in which at least one battery is placed; a fastening cover adapted to be mounted to a support and to be connected with the housing; and protection mechanism for preventing installation of the smoke alarm without a battery; characterized in that said protection mechanism comprises at least one spring member having at least one side arm and a lower arm, which is connected with the at least one side arm and located along and seated in the bottom of the battery compartment; wherein the lower arm is movable between the first position, when at least one battery is missing in the battery compartment, in which the connection region of the lower arm and the at least one side arm is located at distance from the bottom of the battery compartment and in which the at least one side arm protrude above the top surface of the housing and prevent attachment of the housing to the fastening cover and the second position, when all batteries are located in the battery compartment, in which the connection region of the lower arm and the at least one side arm is located adjacent to the bottom of the battery compartment and in which the side arms are retracted below the top surface of the housing to allow attachment of the housing to the fastening cover.

Advantageously, the at least one side arm is placed extending between the battery compartment and the top surface of the housing, in which the at least one side arm of the leaf spring can freely moved between the protruding and retracted positions.

Advantageously, the side arm is placed in an open-ended path, which comprises slots formed between sidewalls and the bottom of the battery compartment, respectively, and openings extending between the slots and the top surface of the housing, respectively.

Advantageously, the lower arm of the spring member is inclined upwards from the point, in which the lower arm is seated in the bottom of the battery compartment to its outer end, where the lower arm connects with the at least one side arm.

Advantageously, the side arm is bended upwards from the lower arm approximately at right angle.

Advantageously, the spring member is C-shaped and its lower arm extends laterally in the battery compartment being bending downwards at its center to form a protrusion and the bottom of the battery compartment has a recess, which receives the protrusion to seat the spring member in the battery compartment.

Advantageously, the spring member is angular and it is placed with its side arm at one of the side walls of the battery compartment and soldered with its lower arm to the bottom of the battery compartment.

Advantageously, at least two angular spring members are placed in the battery compartment being offset in relation to each other along the sidewalls the lower arm of each of them being soldered to the bottom in different points.

Advantageously, the spring member is a sheet-metal spring or a wire spring.

Advantageously, the top surface of the housing is provided with two catches extending upward and bending to opposite directions and the fastening cover is provided with apertures for receiving the catches and clamping them to the fastening cover by rotation movement of the housing in relation to the fastening cover.

Advantageously, the fastening cover comprises holes, which are aligned with the openings when the housing is placed against the fastening cover, and the catches of the housing protrude through the apertures of the fastening cover; wherein the holes house portions of the side arms protruding through the openings to prevent rotation movement of the housing in relation to the fastening cover.

Advantageously, the catches and the projections are lower than the upright peripheral wall of the fastening cover.

The protection mechanism of the smoke alarm according to the present invention is very simple and reliable as it comprises only one member. When the spring member of the mechanism is not pressed by the batteries, which are located in the battery compartment, it prevents installation of the smoke alarm. The mechanism does not require any special actions to deactivate it. Simply inserting batteries into the battery compartment deactivates it.

Smoke alarms are usually mounted to the ceiling. Thus, the words: upper, top, bottom, below, upwards, downwards, etc. determine position and directions in a smoke alarm, in which the fastening cover is mounted to the ceiling and the housing is attached to the fastening cover from below the fastening cover in the vertical direction.

### Brief description of the drawings

The invention is presented by way of the embodiments in the following description taken in conjunction with the accompanying drawing figures, in which:
Figure 1 is an isometric view of a smoke alarm according to the present invention;
Figure 2 is an isometric view of a smoke alarm without a fastening cover and showing a protection mechanism in its position when batteries are inside, according to the present invention;
Figure 3 is an isometric, partly cut out, view of the smoke alarm of Figure 1 with a fastening cover, according to the present invention;
Figure 4 is a partly sectioned side view of the smoke alarm of Figure 3 showing a protection mechanism in its position when batteries are inside, according to the present invention.
Figure 5 is an isometric view of the smoke alarm of Figure 1 without a fastening cover and showing a protection mechanism being in its position when batteries are removed, according to the present invention;
Figure 6 is an isometric, partly cut out, view of the smoke alarm of Figure 1 with a fastening cover and showing a protection mechanism being in its position when batteries are removed, according to the present invention;
Figure 7 is a side view of a partly sectioned smoke alarm of Figure 6 showing a protection mechanism being in its position when batteries are removed, according to the present invention.
Figure 8 is an isometric view of the smoke alarm with a second embodiment of a protection mechanism being in its position when batteries are removed, according to the present invention;
Figure 9 is an isometric view of the smoke alarm with a third embodiment of a protection mechanism being in its position when batteries are removed, according to the present invention.

### Preferred embodiments of the invention

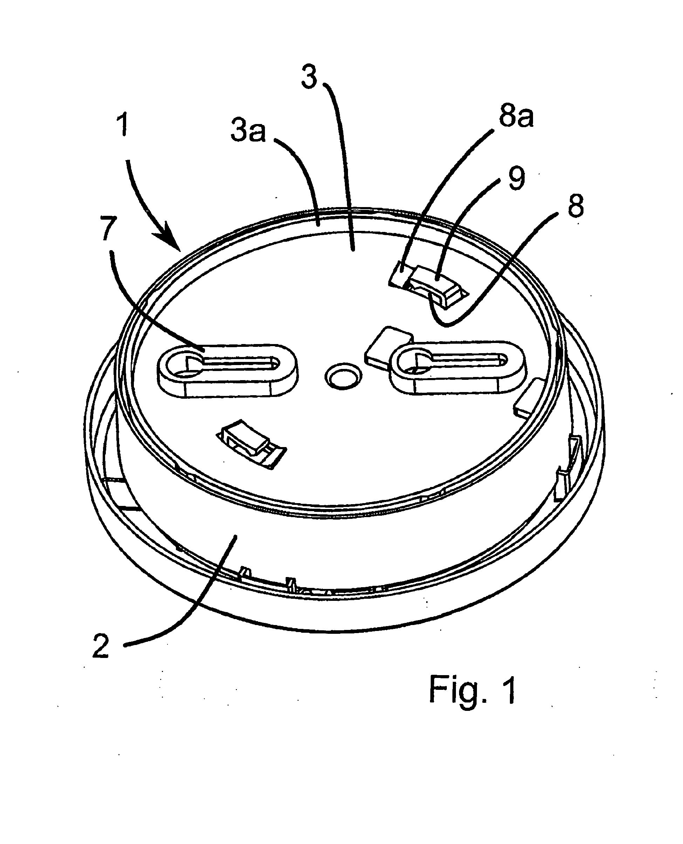

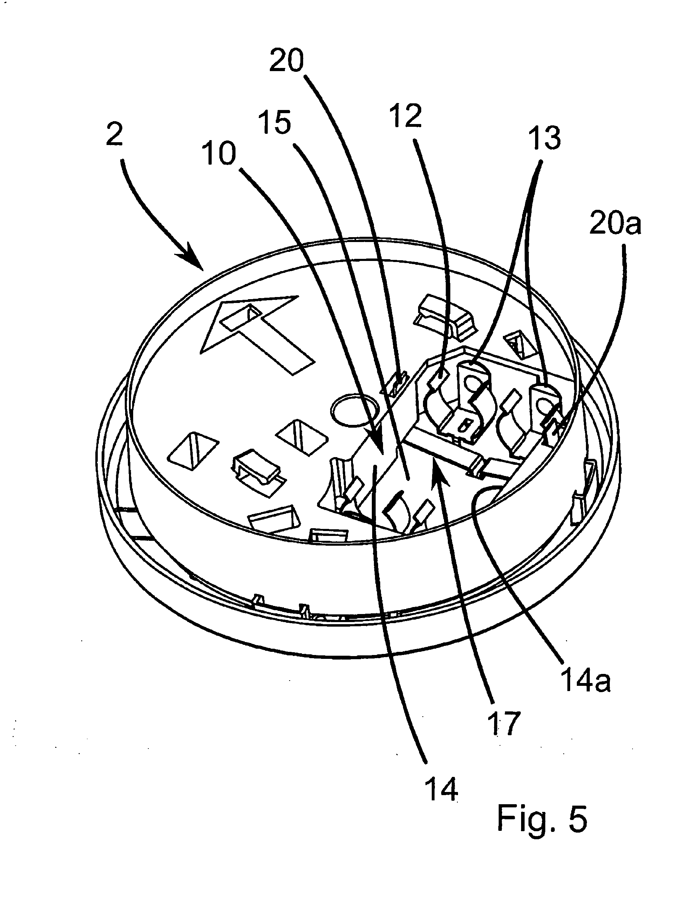

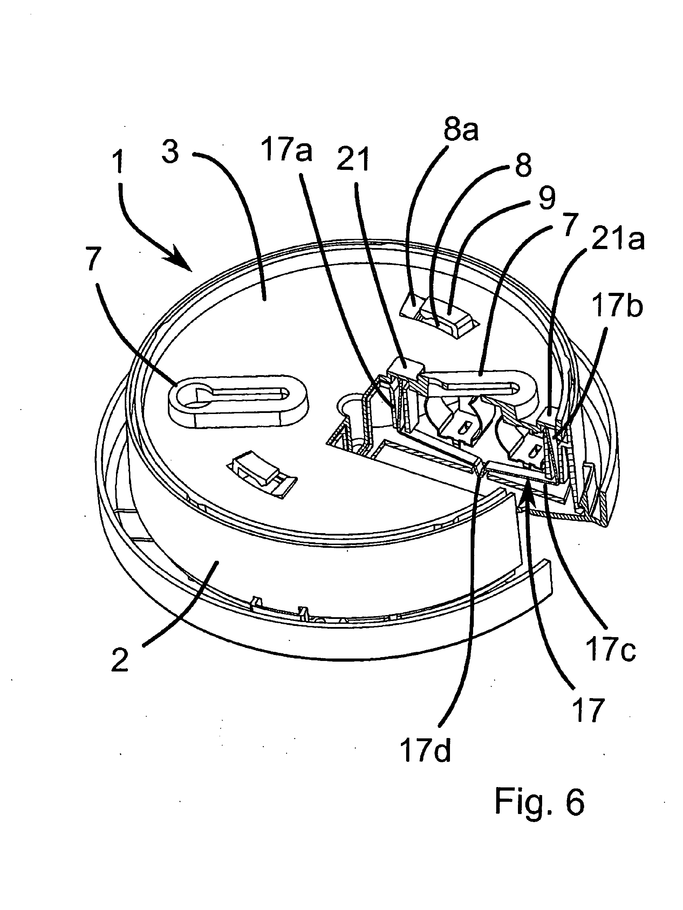

Referring to the Figures 1- 9, wherein identical reference numbers denote the same members throughout the various views, a smoke alarm 1 for detecting and alarming that there is smoke in case of fire is shown. The smoke alarm 1 comprises a housing 2, that is circular in the shown embodiment, and a fastening cover 3 adapted to be located on the top of the housing 2. The housing 2 has a bottom part 4 and annular sidewall 5 extended upwards above the bottom part 4. The housing 2 determines a cavity, in which all detecting smoke means are located (not shown). The top surface 6 of the housing 2 is lower in relation to the peripheral top edge of the annular sidewall 5 of the housing 2. The fastening cover 3 has an upright peripheral wall 3a and it is placed on the top surface 6 with upright peripheral wall 3a being flush with the annular sidewall 5 of the housing 2.

Referring to Fig. 1, 3 and 6, the fastening cover 3 is provided with openings 7 for fixing the fastening cover 3 to a support, e.g. a ceiling, by a screws (not shown) before the housing 2 is attached to it. The fastening cover 3 has also a pair of rectangular apertures 8 with sloped snapping surfaces 8a, and the top surface 6 of the housing 2 is provided with two catches 9 extending upward and each bending to opposite direction for cooperating with the snapping surfaces 8a of the apertures 8 to connect the housing 2 to the fastening cover 3 by pressing and rotation movement of the housing 2 in relation to the fastening cover 3.

The catches 9 extend from the housing top surface 6 for such distance that they protrude through apertures 8 in the fastening cover 3, when the housing 2 is attached to the fastening cover 3, but being still lower than the height of the fastening cover peripheral wall 3a. Shapes of the snapping surfaces 8a of the apertures 8 of the fastening cover 3 and the catches 7 of the housing 2 are such that they engage each other after rotation movement of the housing 2 in relation to the fastening cover 3 and fasten the housing 2 to the fastening cover 3 when the later has been fixed to the ceiling.

The housing 2 has a battery compartment 10 for placing a set of batteries 11 necessary for proper function of the smoke alarm 1. The battery compartment 10 is provided with clamps 12 for fastening the batteries 11 and connectors 13 located at the both ends of the battery compartment 10 for connecting the batteries 11 with detecting/alarming means for supplying electric power.

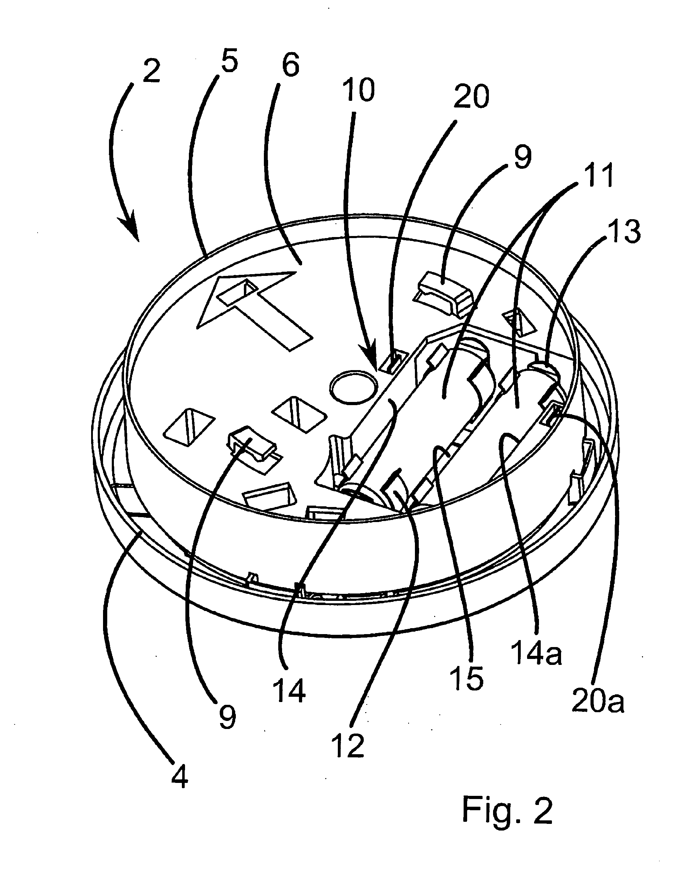

Referring to Figures 2- 9 the battery compartment 10 has a rectangular shape having two opposite sidewalls 14,14a and a bottom 15. The battery compartment 10, the clamps 12 and the connectors 13 are designed to receive two cylindrical batteries 11, which are placed parallel to each other. A number of batteries 11 may be other than two. When the fastening cover 3 is fixed to a support, for example by a screw placed in the openings 7 and mounted in the support, and when the batteries 11 required for proper function of the smoke alarm 1 are already in place in the battery compartment 10, the housing 2 is attached to the fastening cover 3 by pushing the housing 2 against the fastening cover 3 in such way that the catches 9 are received in the apertures 8 and next by performing a rotation movement of the housing 2 in relation to the fixed fastening cover 3 which results in clamping the catches 9 on the snapping surfaces 8a of the apertures 8.

To avoid the possibility of attaching the housing 2 to the fastening cover 3 when batteries 11 have not been placed in the battery compartment 10 and to reduce the risk of installation of a non-operational smoke alarm 1, a protection mechanism is provided in the battery compartment 10 of the smoke alarm 1 according to the invention. It is better seen in Fig. 2,3 and 5,6 the protection mechanism according to the invention comprises a spring member 17, which is seated in the bottom 15 of the battery compartment 10 and movable between the two positions in relation of the bottom 15 in vertical direction.

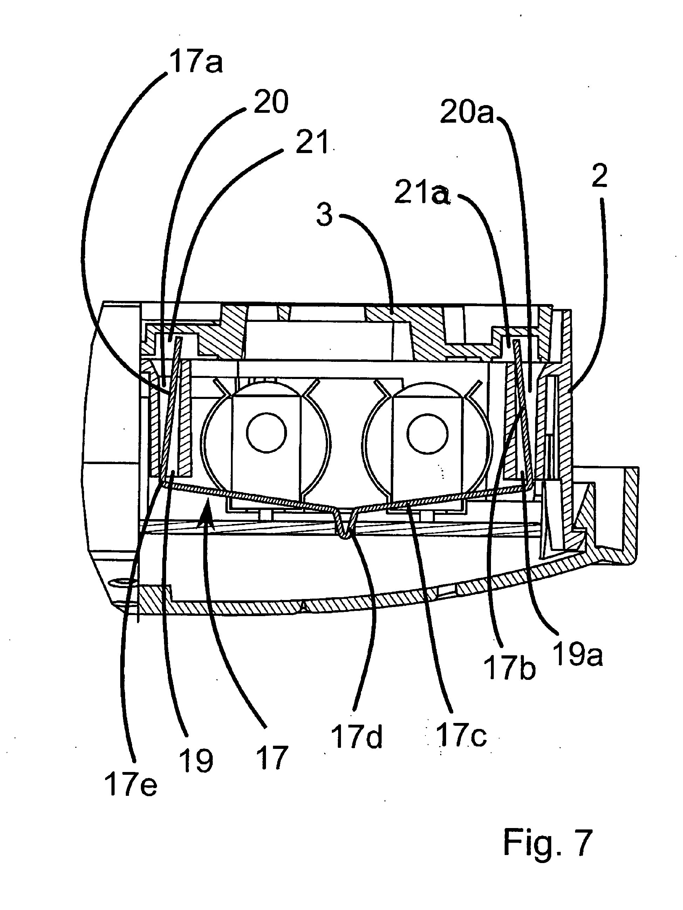

In the embodiment of the invention shown in Fig. 2-7 the spring member 17 is in a C-formed flat sheet-metal spring having first and second side arms 17a, 17b with a lower arm 17c between them located laterally in the battery compartment 10. Preferably, the lower arm 17c is bended downwards at its center to form a protrusion 17d and the bottom 15 of the battery compartment 10 has a recess 18, which receives the protrusion 17d to fix the position of the spring member 17 in relation to the battery compartment 10. As it is seen in Fig. 7, the lower arm 17c of the spring member 17 is inclined upwards from the point, in which the lower arm 17c is seated in the bottom 15 of the battery compartment 10 to each of its outer ends, where the lower arm 17c connects with the side arms 17a,17b in a connection regions 17e. The first and second side arms 17a and 17b are bended upwards from the lower arm 17c, approximately at right angle.

According to the invention, the spring member 17 is placed extending between the battery compartment 10 to the top surface 6 of the housing 2. As it is seen in Figures 2- 9 the spring member 17 may be located in an open-ended channel comprising slots 19, 19a formed between sidewalls 14 and 14a and the bottom 15 of the battery compartment 10, respectively, and openings 20, 20a extending between the top surface 6 of the housing 2 and the slots 19, 19a, respectively. The size of the openings 20, 20a are adapted to place the side arms 17a,17b of the spring member 17 in them and allow the side arms 17a,17b to slide trough them freely. The lower arm 17c of the spring member 17 extends to and passes through the slots 19,19a and the side arms 17a,17b protrude through the openings 20,20a, respectively.

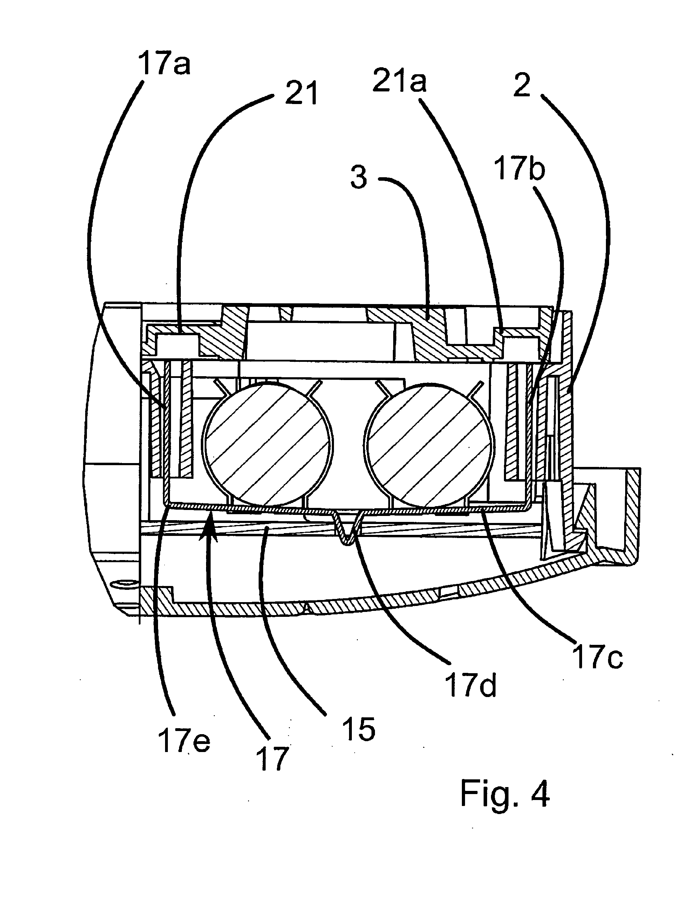

When there is no battery 11 in the battery compartment 10 the lower arm 17c of the spring member 17 is in its first position, in which at least one of the connection regions 17e of the lower arm 17c and the side arms 17a, 17b is located at distance from the bottom 15 of the battery compartment 10 causing that the at least one of the side arms 17a,17b protrudes through the openings 20,20a above the top surface 6 of the housing 2 and prevent attachment of the housing 2 to the fastening cover 3. (see Figures 4, 5, 6)

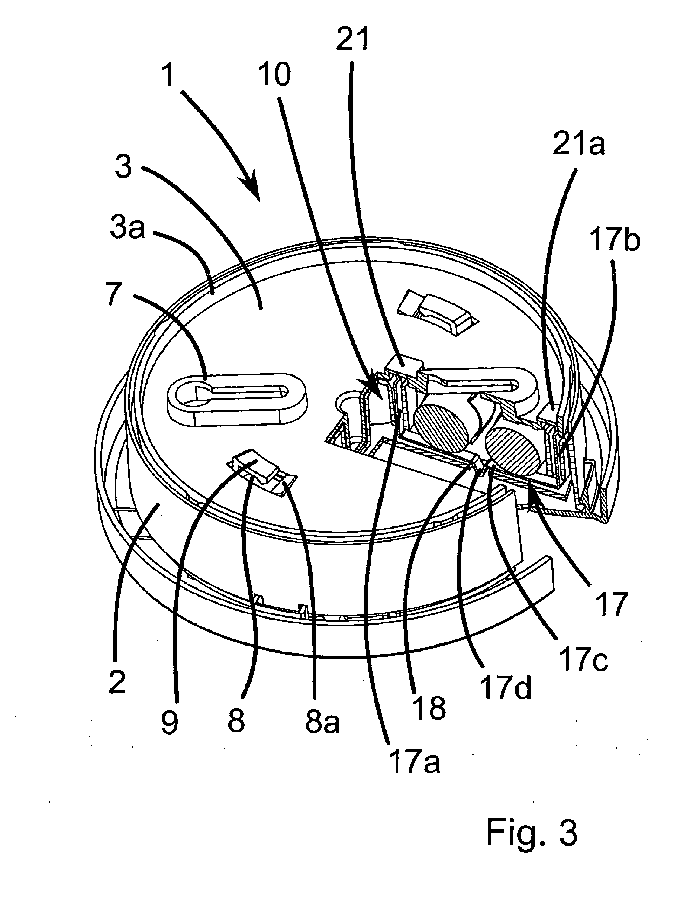

Referring to Figures 3,4 and 6,7 the fastening cover 3 comprises holes 21, 21a, which are aligned with the ends of the spring member 17 seated in the battery compartment 10,when the housing 2 is placed against the fastening cover 3 and the catches 9 of the housing 2 protrude through the apertures 8 of the fastening cover 3. The holes 21,21a house the side arms ends protruding through the openings 20,20a above the top surface 6 of the housing 2 when there is insufficient number of batteries 11 in the battery compartment 10. The size of holes 21,21 a is designed in such way that interaction between the protruding side arms ends and the internal walls of the holes 21, 21 a blocks rotation movement of the housing 2 in relation to the fastening cover 3 that clamping the catches 9 of the housing 2 on the snapping surfaces 8a of the apertures 8 of the fastening cover 3 is prevented.. This protects the attachment of the housing 2 to the fastening cover 3 and installation of the smoke alarm 1 when the required batteries 11 are not in the place. As it is shown in Fig. 1,3,4,7 the holes 21,21 a may be covered by specially shaped part of the fastening cover 3.

For proper work of the smoke alarm 1 the predetermined number of batteries 11 must be put into the battery compartment 10, fastened by the clamps 12 and pressed against the connectors 13.

At the same time, the batteries 11 press down the lower arm 17c of the spring member 17 towards the battery compartment bottom 15 causing that the lower arm 17c is being moved to its second position, in which the connection region 17e of the lower arm 17c and the at least one side arm 17a, 17b is located adjacent to the bottom 15 of the battery compartment 10 and side arms 17a,17b retract below the top surface 6 of the housing 2 to allow the housing 2 to be attached to the fastening cover 3. The side arms 17a,17b retract completely into the openings 20,20a from the inside of the holes 21,21 a. Thus, the free rotation movement of the housing 2 in relation to the fastening cover 3 is no longer prevented. This allows the catches 9 of the housing 2 to be clamped on the snapping surfaces 8a of the apertures 8 of the fastening cover 3 and the smoke alarm 1 to be installed to a support. (Figures 2, 3 and 4)

It should be noted that generally lack of at least one battery 11 in the battery compartment 10 does not allow the housing 2 to be attached to the fastening cover 3, i.e. does not allow the smoke alarm 1 to be mounted on a support.

Placing only one battery 11 into the battery compartment 10, when two batteries are required, will cause that still one of the side arms 17a, 17b will protrude from the opening 20 or 20a.

It is obvious for a skilled person in the art that different modifications of the invention can be envisaged.

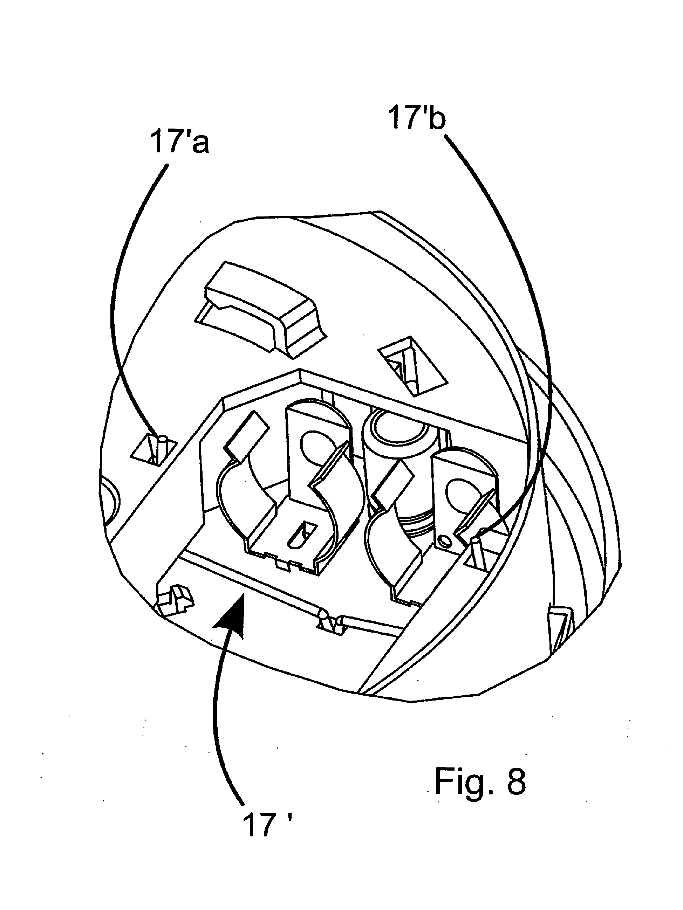

Referring to Fig. 8 the second embodiment of a smoke alarm 1 is shown. The smoke alarm of Fig. 8 differs from the smoke alarm described with reference to Fig. 2-7 in that its protection mechanism comprises the spring member 17', which is in form of a wire spring instead of sheet-metal spring. Side arms 17'a,17'b of the spring member 17' act in the same way as the side arms 17a,17b of the spring member 17 of Figures 2-7.

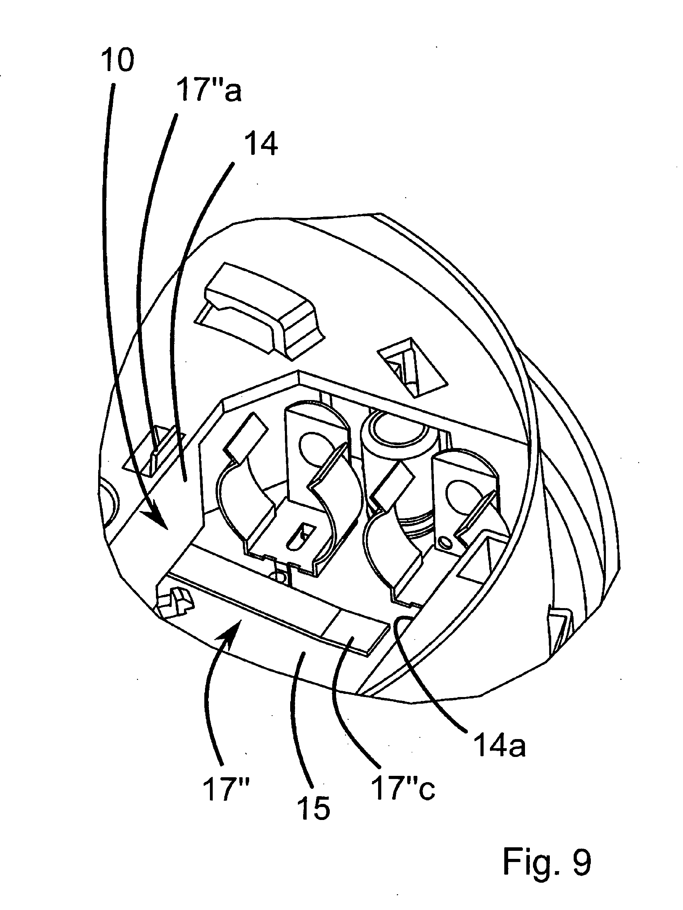

Referring to Fig. 9 the further embodiment of the protection mechanism of smoke alarm 1 is shown. The protection mechanism of Fig. 9 differs from the protection mechanism described with reference to Fig. 2-7 in that it comprises an angular spring member 17". The angular spring member 17" is placed with its side arm 17"a at one of the side walls 14,14a of the battery compartment 10 and soldered with its lower arm 17"c to the bottom 15 of the battery compartment 10, instead of being seated in a recess in the bottom 15. While only one spring member 17" for one battery is shown in Fig. 9, it is understandable that also two or more such spring members 17" may be placed at the opposite side walls 14,14a of the battery compartment 10 and in such case they are offset in relation to each other along the sidewalls 14,14a of the battery compartment 10 and soldered to the bottom 15 of the battery compartment 10 in different places.

The lower arm 17"c of each of the angular spring members 17" may be seated in different places in the bottom 15 and side arms of each of them may be placed alternately at the opposite sidewall of the battery compartment 10.

A battery compartment may be of different shape and/or it can house batteries of different shapes than the presented above.

### Reference numbers

| | | |
|---|---|---|
| 1 | smoke alarm | urzadzenie alarmowe dymu |
| 2 | housing | obudowa |
| 3 | fastening cover | pokrywa mocujaca |
| 3a | peripheral wall | ściana obwodowa |
| 4 | bottom part (of housing) | dolna 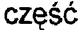 (obudowy) |
| 5 | annular wall(of housing) | pierścieniowa ściana |
| 6 | top surface (of housing) | górna powierzchnia |
| 7 | opening | otwór |
| 8 | aperture | wyci 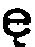 ecie |
| 8a | snapping surface | powierzchnia zatrzaskowa |
| 9 | catch | zatrzask |
| 10 | battery compartment | komora baterii |
| 11 | battery | bacteria |
| 12 | clamps | zaczep |
| 13 | connector | l 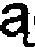 cznik |
| 14,14a | sidewalls (of the battery compartment) | ściana boczna |
| 15 | bottom (of the battery compartment) | ściana dolna |
| 17,17',17" | spring member | czton spr 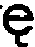 zysty |
| 17a,17b 17'a,17'b 17"a,17"b | side arms | ramiona boczne |
| 17c,17"c | lower arm | rami 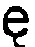 dolne |
| 17d | protrusion | wyst 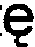 p |
| 17e | connection region | obszar polc 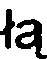 zenia |
| 18 | recess | wgl 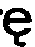 bienie |
| 19,19a | slot | szczelina |
| 20,20a | opening | otwór przelotowy |
| 21,21a | hole | okno |

## Claims

1. A smoke alarm (1) comprising:
a housing (2) having a top surface (6) and delimiting a battery compartment (10) having sidewalls (14,14a) and a bottom (15), in which at least one battery (11) is placed;
a fastening cover (3) adapted to be mounted to a support and to be connected with the housing (2); and
protection mechanism for preventing installation of the alarm (1) without a battery (11)
**characterized in that**
said protection mechanism comprises at least one spring member (17,17',17") having at least one side arm (17a,17b;17'a,17'b;17"a,17"b) and a lower arm (17c), which is connected with the at least one side arm (17a,17b; 17'a,17'b;17"a,17"b) and located along and seated in the bottom (15) of the battery compartment (10); wherein the lower arm (17c;17"c) is movable between the first position, when at least one battery (11) is missing in the battery compartment (10), in which the connection region (17e) of the lower arm (17c; 17"c) and the at least one side arm (17a,17b;17'a,17'b;17"a,17"b) is located at distance from the bottom (15) of the battery compartment (10) and in which the at least one side arm (17a,17b;17'a,17'b;17"a,17"b) protrudes above the top surface (6) of the housing (2) and prevents attachment of the housing (2) to the fastening cover (3) and the second position, when all batteries (11) are located in the battery compartment (10), in which the connection region (17e) of the lower arm (17c; 17"c) and the at least one side arm (17a,17b;17'a,17'b;17"a,17"b) is located adjacent to the bottom (15) of the battery compartment (10) and in which the side arms (17a,17b;17'a,17'b;17"a,17"b) are retracted below the top surface (6) of the housing (2) to allow attachment of the housing (2) to the fastening cover (3).

2. A smoke alarm (1) according to claim 1, **characterized in that** the side arm (17a,17b;17'a,17'b;17"a,17"b) is placed extending between the battery compartment (10) and the top surface (6) of the housing (2), in which the side arm (17a,17b;17'a,17'b;17"a,17"b) of the spring member (17,17',17") can freely moved between the protruding and retracted positions.

3. A smoke alarm (1) according to claim 2, **characterized in that** the side arm (17a,17b;17'a,17'b;17"a,17"b) is placed in an open-ended path, which comprises slots (19,19a) formed between sidewalls (14,14a) and the bottom (15) of the battery compartment (10), respectively, and openings (20, 20a) extending between the slots (19,19a) and the top surface (6) of the housing (2), respectively.

4. A smoke alarm (1) according to any of claims 1-3 **characterized in that** the lower arm (17c;17"c) of the spring member (17,17',17") is inclined upwards from the point, in which the lower arm (17c;17"c) is seated in the bottom (15) of the battery compartment (10) to its outer end, where the lower arm (17c; 17"c) connects with the at least one side arm (17a,17b;17'a,17'b;17"a,17"b).

5. A smoke alarm (1) according to any of claims 1-4 **characterized in that** the side arm (17a, 17b; 17'a,17'b; 17"a,17"b) is bended upwards from the lower arm (17c; 17"c) approximately at right angle.

6. A smoke alarm (1) according to any of claims 1-5 **characterized in that** the spring member (17,17') is C-shaped and its lower arm (17c) extends laterally in the battery compartment (10) being bending downwards at its center to form a protrusion (17d) and the bottom (15) of the battery compartment (10) has a recess (18), which receives the protrusion (17d) to seat the spring member (17,17') in the battery compartment (10).

7. A smoke alarm (1) according to any of claims 1-5 **characterized in that** the spring member (17") is angular and it is placed with its side arm (17"a) at one of the side walls (14a,14b) of the battery compartment (10) and soldered with its lower arm (17"c) to the bottom (15) of the battery compartment (10).

8. A smoke alarm (1) according to claim 7 **characterized in that** at least two angular spring members (17") are placed in the battery compartment (10) being offset in relation to each other along the sidewalls (14,14a) the lower arm (17"c) of each of them being soldered to the bottom (15) in different points.

9. A smoke alarm (1) according to claims 6-8, **characterized in that** the spring member (17,17',17") is a sheet-metal spring or a wire spring.

10. A smoke alarm (1) according to any of claims 1-7 **characterized in that** the top surface (6) of the housing (2) is provided with two catches (9) extending upward and bending to opposite directions and the fastening cover (3) is provided with apertures (8) for receiving the catches (9) and clamping them to the fasten cover (3) by rotation movement of the housing (2) in relation to the fastening cover (3).

11. A smoke alarm (1) according to any of claims 1-8 **characterized in that** the fastening cover (3) comprises holes (21, 21a), which are aligned with the openings (20,20a) when the housing (2) is placed against the fastening cover (3) and the catches (9) of the housing (2) protrude through the apertures (8) of the fastening cover (3); wherein the holes (21,21a) house portions of the side arms (17a,17b) protruding through the openings (20,20a) to prevent rotation movement of the housing (2) in relation to the fastening cover (3).

12. A smoke alarm (1) according to claims 8-9 **characterized in that** the catches (9) and the projections (21,21 a) are lower than the upright peripheral wall (3a) of the fastening cover (3).
